# EUROPEAN PATENT APPLICATION

(11) **EP 2 762 963 A1**
(43) Date of publication of application: **06.08.2014**
(21) Application number: 14153302.6
(22) Date of filing: 30.01.2014
(51) Int. Cl.: G02F 1/1339, G02F 1/1335, G02B 5/02

(54) **Display module with a spacer for a diffusion plate**

(30) Priority: 31.01.2013 KR 20130011149
(71) Applicant: Samsung Electronics Co., Ltd, Gyeonggi-do 443-742 (KR)
(72) Inventor: Lee, Dae Hee, Gyeonggi-do (KR); Ahn, Young Man, Gyeonggi-Do (KR); Jang, Nae Won, Gyeonggi-do (KR); Cho, Byoung Jin, Gyeonggi-do (KR); Choi, Hyeong Sik, Gyeonggi-do (KR)
(74) Representative: Misselbrook, Paul

(57) **Abstract**

A display module includes a display panel, a diffusion plate, a bottom chassis, and a transparent spacer made having a diffusion pattern formed thereon disposed on the bottom chassis to support the diffusion plate.

## Description

The present invention relates to a display panel for displaying an image, a display module having a backlight unit for emitting light to the display panel, and a display apparatus having the same.

In general, a display module is an apparatus including a display panel on which an image is displayed, and may be used in various display apparatuses, such as monitors and televisions.

A liquid crystal display panel is widely used as a display panel, but the display panel using the liquid crystal display panel is not capable of generating light by itself. For this reason, a backlight unit is disposed behind the display panel, and a diffusion plate to diffuse light emitted from the backlight unit is arranged between the display panel and the backlight unit. Thereby, light may be evenly dispersed and supplied to the overall display panel.

In addition, such a display module includes a spacer to maintain a state in which a bottom chassis defining a rear surface of the display module and the diffusion plate are spaced apart from each other by a certain distance.

Aspects of the exemplary embodiments of the present invention provide a display module and a display apparatus capable of reducing light loss generated by a spacer.

Additional aspects of the exemplary embodiments will be set forth in part in the description which follows and, in part, will be obvious from the description, or may be learned by practice.

According to an aspect of an exemplary embodiment, a display module includes a display panel, a diffusion plate, a bottom chassis, and a spacer disposed on the bottom chassis configured to support the diffusion plate, wherein the spacer is configured to permit light transmission through the spacer, and the spacer is formed with a diffusion pattern configured to diffuse light transmitted through the spacer.

The diffusion pattern may be formed by a plurality of grooves concavely formed on an outer surface of the spacer.

The plurality of grooves may extend parallel with a rear surface of the bottom chassis.

The diffusion pattern may be formed by a plurality of protrusions convexly formed on an outer surface of the spacer.

The plurality of protrusions may extend parallel with a rear surface of the bottom chassis.

The spacer may be formed in a plate shape which has a width gradually narrowing from the bottom chassis toward the diffusion plate, and the diffusion pattern may be formed on surfaces of the spacer.

The spacer may be formed in a triangular plate shape.

The spacer may include a support portion arranged at a bottom chassis side end portion of the spacer portion configured to be disposed on an inner surface of the bottom chassis.

A surface of the support portion of the spacer facing the diffusion plate may be white.

The spacer may include a catching portion configured to pass through the bottom chassis, and the bottom chassis may include a catching hole through which the catching portion passes.

According to an aspect of an exemplary embodiment, a display apparatus includes a display module, wherein the display module includes a display panel, a diffusion plate, a bottom chassis, and a spacer disposed on the bottom chassis configured to support the diffusion plate, the spacer configured to permit light transmission through the spacer, and the spacer is formed with a diffusion pattern to diffuse light transmitted through the spacer.

The above and other aspects of the exemplary embodiments will become apparent and more readily appreciated from the following description of the exemplary embodiments, taken in conjunction with the accompanying drawings of which:
FIG. 1 is an exploded perspective view illustrating a display apparatus according to an exemplary embodiment;
FIG. 2 is an exploded perspective view illustrating a display module according to an exemplary embodiment;
FIG. 3 is a cross-sectional view illustrating the display module according to an exemplary embodiment;
FIG. 4 is a perspective view illustrating an installation state of a spacer according to an exemplary embodiment;

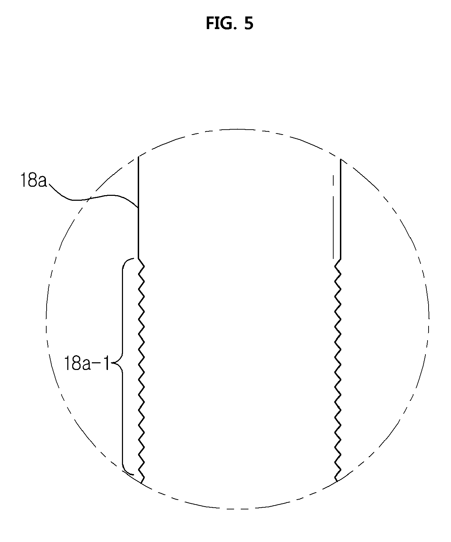

FIG. 5 is a cross-sectional view of portion A in FIG. 3; and
FIG. 6 is a partial cross-sectional view illustrating a spacer according to an exemplary embodiment.

Hereinafter, a display apparatus according to exemplary embodiments will be described in detail with reference to the drawings, wherein like reference numerals refer to like elements throughout.

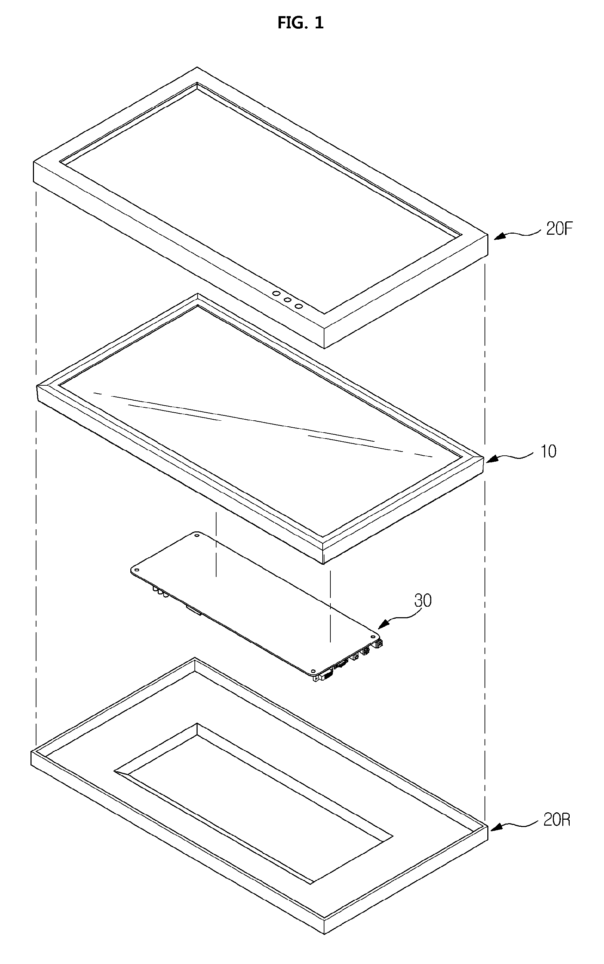

As shown in FIG. 1, a display apparatus includes a display module 10 on which an image is displayed, a front case 20F and a rear case 20R between which the display module 10 is installed while the front case 20F and the rear case 20R are coupled to each other in a forward and rearward direction. A control substrate 30 is disposed between the display module 10 and the rear case 20R to transmit power and a signal to the display module 10.

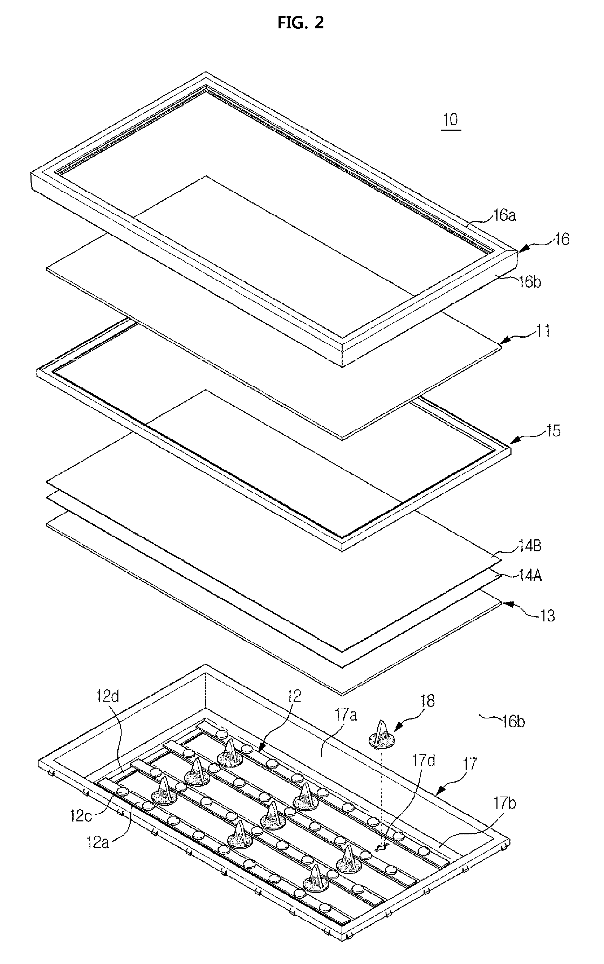

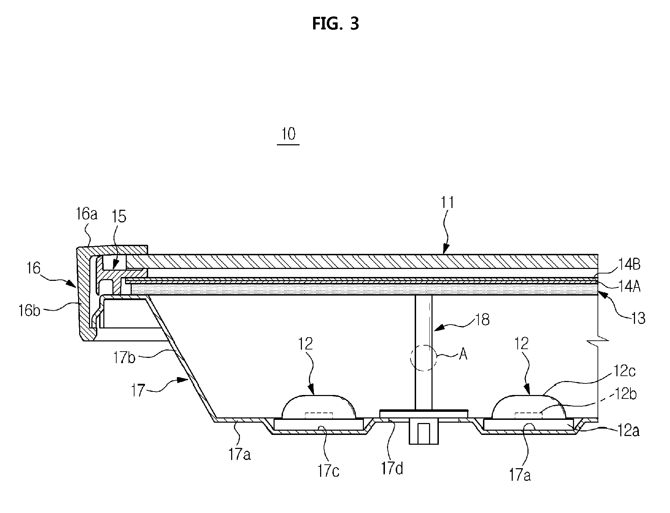

As shown in FIGS. 2 and 3, the display module 10 includes a display panel 11 which is configured of a liquid crystal display panel and on which a screen is displayed, backlight units 12 which are disposed behind the display panel 11 to be spaced apart from each other to supply light to the display panel 11, a diffusion plate 13 to diffuse light emitted from the backlight units 12, and a variety of optical sheets 14A and 14B disposed on a rear surface of the display panel 11.

In addition, the display module 10 includes a middle or "intermediate" mold 15 to support the display panel 11 and the diffusion plate 13, a top chassis 16 installed in front of the middle mold 15 to maintain a state in which the display panel 11 is installed to the middle mold 15, and a bottom chassis 17 which is installed behind the middle mold 15 and in which the backlight units 12 are installed. The bottom chassis may also be referred to simply as a "chassis".

The backlight units 12 include printed circuit boards 12a which are disposed in the bottom chassis 17 while each has a conductive pattern, light emitting diodes 12b which are installed on a front surface of each printed circuit board 12a to face the diffusion plate 13, and circular lenses 12c which are installed on the respective light emitting diodes 12b to diffuse light generated by the light emitting diodes 12b.

In this exemplary embodiment, each printed circuit board 12a is elongated in one direction to have a length corresponding to the length of the display panel 11. The plural printed circuit boards 12a are disposed to be spaced parallel with each other. Each printed circuit board 12a is provided such that the plural light emitting diodes 12b and the plural lenses 12c installed on the respective light emitting diodes 12b are disposed to be spaced apart from each other in a longitudinal direction of the printed circuit board. The plural printed circuit boards 12a are connected to each other through a connection substrate 12d.

The optical sheets 14A and 14B may include a prism film 14A to concentrate light diffused by the diffusion plate 13 in a direction perpendicular to the display panel 11, a protective film 14B to protect the prism film 14A, and the like.

The middle mold 15 is provided, at the front side thereof, with the display panel 11 while being provided, at the rear side thereof, with the diffusion plate 13, so that the middle mold 15 supports configurations such as the display panel 11 and the diffusion plate 13.

The top chassis 16 has a bezel portion 16a covering a front surface peripheral side of the display panel 11, and a top side surface portion 16b bent rearward from a peripheral side of the bezel portion 16a.

The bottom chassis 17 has a substantially rectangular shape, and includes a bottom rear surface portion 17a on which the backlight units 12 are seated and a bottom side surface portion 17b at the periphery of the bottom chassis 17, extending outwardly from the bottom rear surface portion 17a. The bottom rear surface portion 17a is provided with seating grooves 17c which are recessed so that the printed circuit boards 12a of the backlight units 12 are respectively seated on the seating grooves 17c.

In addition, the display module 10 includes a spacer 18 supporting between the bottom chassis 17 and the diffusion plate 13 to maintain a state in which the bottom chassis 17 and the diffusion plate 13 are spaced apart from each other by a certain distance. A plurality of spacers 18 is provided spaced apart from each other in grid configuration.

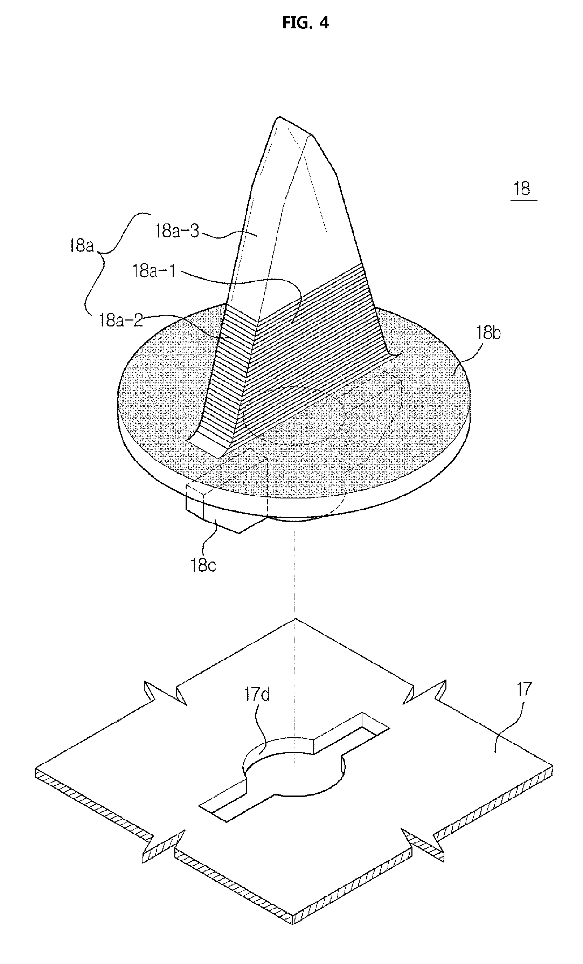

As shown in FIG. 4, each of the spacers 18 integrally includes a spacer portion 18a extending toward the diffusion plate 13 from the rear-located bottom chassis 17 and disposed at a space between an inner surface of the bottom chassis 17 and a rear surface of the diffusion plate 13 to maintain a state in which the bottom chassis 17 and the diffusion plate 13 are spaced apart from each other by a certain distance, a support portion 18b arranged at an end portion of the spacer portion 18a on the bottom chassis 17 side to rest on the inner surface of the bottom chassis 17, and a catching portion 18c which extends from the support portion 18b and is arranged to engage the bottom chassis 17, specifically to be "caught" by the bottom chassis 17 when passing through a hole in the bottom chassis 17.

The spacer portion 18a is formed in a plate shape which extends in a direction perpendicular to the inner surface of the bottom chassis 17 and has a width gradually narrowing from the bottom chassis 17 toward the diffusion plate 13. In this exemplary embodiment, the spacer portion 18a is shaped as a substantially triangular plate.

The support portion 18b is integrally formed at the end portion of the spacer portion 18a on the bottom chassis 17 side in a circular plate parallel with the inner surface of the bottom chassis 17 and rests on the inner surface of the bottom chassis 17. Thus, the spacer portion 18a may be maintained in an installed state perpendicular to the bottom chassis 17.

The catching portion 18c extends from the support portion 18b and is caught by passing through the bottom chassis 17. The bottom chassis 17 is provided with a catching hole 17d through which the corresponding catching portion 18c passes to be caught.

Such a spacer 18 is made of a transparent material such that light emitted by each light emitting diode 12b may pass through the spacer 18 to be transmitted to the diffusion plate 13.

As such, when the spacer 18 is made of a transparent material, a portion of light generated by the light emitting diode 12b enters the spacer portion 18a and moves to the catching portion 18c along the spacer portion 18a, thereby leaking behind the bottom chassis 17 through the catching portion 18c. Therefore, light loss may occur.

Accordingly, one or more surfaces of the spacer portion 18a are provided with diffusion patterns 18a-1 to diffuse light. In this exemplary embodiment, each of the diffusion patterns 18a-1 is recessed and formed by grooves extending parallel with the rear surface of the bottom chassis 17.

In this case, the diffusion pattern 18a-1 is restrictively formed only on a partial region 18d of the spacer portion 18a at or near the bottom chassis 17 side. This serves to prevent the situation that would arise if, were the diffusion pattern 18a-1 to be formed on an end portion 18e of the spacer portion 18a on the diffusion plate 13 side, light generated by the light emitting diode 12b may not pass through the end portion 18e of the spacer portion 18a on the diffusion plate 13 side, to be transmitted to the diffusion plate.

As described above, when the diffusion pattern 18a-1 is restrictively formed on the end portion 18d of the spacer portion 18a on the bottom chassis 17 side, light generated by the light emitting diode 12b reaches the diffusion plate 13 by passing through an end portion 18e of the spacer portion 18a on the diffusion plate 13 side, and light incident within the spacer portion 18a through the end portion 18e of the spacer portion 18a on the diffusion plate 13 side is emitted from the spacer portion 18a while being diffused by the diffusion pattern 18a-1 in moving to the end portion 18d of the spacer portion 18a on the bottom chassis 17 side, along the inside of the spacer portion 18a. Consequently, light transmitted to the catching portion 18c of the spacer 18 is decreased, and thus light loss is reduced.

In addition, a surface of the support portion 18b corresponding to the diffusion plate 13 may be colored white. This serves to prevent light from being introduced into the spacer 18 through the support portion 18b.

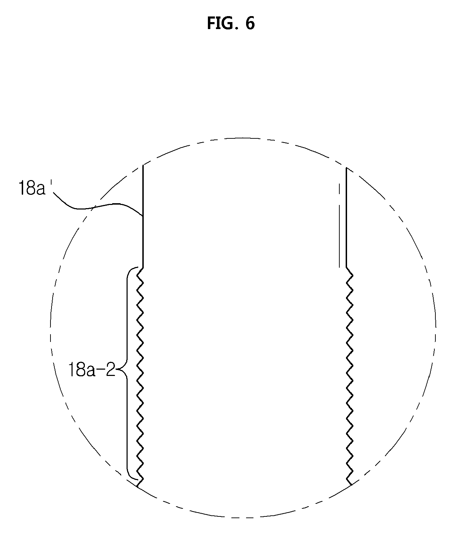

Although the diffusion pattern 18a-1 is formed in the grooves extending parallel with the bottom chassis 17 in this exemplary embodiment, the diffusion pattern 18a-1 is not limited thereto. For example, as shown in FIG. 6, a spacer portion 18a' may be provided with diffusion patterns 18a-2 formed by protrusions extending parallel with the bottom chassis 17. Accordingly, light may also be diffused by diffusion patterns having various forms. For example, the diffusion patterns may be convex protrusions or formed on the outer surface of the spacer portion, or the diffusion patterns may be concave recesses or grooves formed on the outer surface of the spacer portion.

As is apparent from the above description, since a diffusion pattern is formed on a spacer portion toward a bottom chassis, light introduced into the spacer portion is diffused by the diffusion pattern and emitted from the spacer portion to the outside, and thus it may be possible to reduce light loss generated by leakage of light behind the bottom chassis through a catching portion.

Although a few exemplary embodiments have been shown and described, it would be appreciated by those skilled in the art that changes may be made in these exemplary embodiments without departing from the principles invention, the scope of which is defined in the claims.

## Claims

1. A display module comprising:
a display panel;
a diffusion plate;
a chassis; and
a spacer disposed on the chassis configured to support the diffusion plate, wherein
the spacer is configured to permit light transmission through the spacer, and the spacer is formed with a diffusion pattern configured to diffuse light transmitted through the spacer.

2. The display module according to claim 1, wherein the diffusion pattern is formed by a plurality of grooves concavely formed on an outer surface of the spacer, or a plurality of protrusions convexly formed on an outer surface of the spacer.

3. The display module according to claim 2, wherein the plurality of protrusions extends parallel to a rear surface of the chassis.

4. The display module according to claim 1, wherein:
the spacer is formed in a plate shape which has a width gradually narrowing from the chassis toward the diffusion plate; and
the diffusion pattern is formed on surfaces of the spacer.

5. The display module according to claim 5, wherein the spacer is formed in a triangular plate shape.

6. The display module according to claim 1, wherein the spacer comprises a support portion arranged at an end portion of the spacer at the chassis side, and configured to be disposed on an inner surface of the chassis.

7. The display module according to claim 6, wherein a surface of the support portion of the spacer facing the diffusion plate is white.

8. The display module according to claim 1, wherein:
the spacer comprises a catching portion configured to pass through the bottom chassis, and
the bottom chassis comprises a catching hole through which the catching portion passes.

9. The display module according to any one of the preceding claims, wherein the spacer comprises:
a base configured to be disposed on the chassis; and
a spacer portion extending from the base and configured to extend from the base to the diffusion plate; and
wherein the diffusion pattern is formed in a lower portion of the spacer portion extending a distance from the chassis that is less than a length of the spacer portion.

10. A display apparatus comprising the display module of any one of the preceding claims.

11. A spacer of a display module configured to be disposed on a chassis of the display module and configured to support a diffusion sheet of the display module, the spacer comprising:
a base configured to be disposed on the chassis;
a spacer portion extending from the base and configured to extend from the base to the diffusion plate; and
a diffusion pattern formed in the spacer portion configured to diffuse light transmitted through the spacer.

12. The spacer according to claim 11, wherein the diffusion pattern is formed in a lower portion of the spacer portion extending a distance from the base that is less than a length of the spacer portion.

13. The spacer according to claim 12, further comprising:
a catch portion configured to extend from the base towards the chassis and configured to seat the spacer in the chassis.

14. The spacer according to claim 13, wherein the base is circular shaped and the spacer portion is triangular shaped.

15. The spacer according to claim 14, wherein the base is white, or wherein the spacer is transparent.
